# EUROPEAN PATENT APPLICATION

(11) **EP 4 582 486 A1**
(43) Date of publication of application: **09.07.2025**
(21) Application number: 23860839.2
(22) Date of filing: 29.08.2023
(51) Int. Cl.: C08L 77/00, C08L 67/02, C08L 23/26, C08L 23/08, F17C 1/16

(54) **POLYAMIDE RESIN COMPOSITION**

(30) Priority: 30.08.2022 KR 20220109339
(71) Applicant: Samyang Corporation, Jongno-gu Seoul 03129 (KR)
(72) Inventor: LEE, Sung Min, Daejeon 34179 (KR); KWON, Young Rock, Daejeon 34071 (KR); SON, Oh Gun, Daejeon 35248 (KR)
(74) Representative: Gleiss Große Schrell und Partner mbB
(86) International application number: PCT/KR2023/012787
(87) International publication number: WO 2024/049163

(57) **Abstract**

The present invention relates to a polyamide resin composition and, more specifically, to: a polyamide resin composition which, by comprising a polyamide resin, a thermoplastic polyester elastomer (TPEE), an impact modifier, and a nucleating agent in a specific weight ratio, can exhibit excellent gas barrier properties and excellent impact resistance (particularly, high low-temperature impact resistance) simultaneously, and furthermore, can be very suitable for use as an inner liner of a gas storage container due to excellent heat resistance and mechanical properties such as tensile strength; and a molded product comprising same (particularly, an inner liner of a gas storage container).

## Description

### TECHNICAL FIELD

The present invention relates to a polyamide resin composition, and more specifically, the present invention relates to a polyamide resin composition which comprises a polyamide resin, a thermoplastic polyester elastomer (TPEE), an impact modifier and a nucleating agent with specific amount ratios, and thereby exhibits excellent gas barrier property and excellent impact resistance (particularly, high impact resistance at low temperature) at the same time and also has good mechanical properties such as tensile strength and good heat resistance, and so can be utilized very suitably for use as inner liner of gas storage container, and a molded article (particularly, an inner liner of gas storage container) comprising the same.

### BACKGROUND ART

Polyamide resin has excellent heat resistance, mechanical properties, oil resistance and chemical resistance, and so it is widely used for parts in electric/electronic industry and automobile industry, and for a composition containing polyamide resin, various properties are required according to concrete use thereof. In particular, in order to be used as an inner liner of gas storage container, a polyamide resin composition is required to have excellent impact resistance and excellent gas barrier property at the same time.

However, the existing polyamide resin compositions have limitations in satisfying excellent impact resistance and excellent gas barrier property at the same time. For example, a polyamide resin composition disclosed in Japanese Patent No. 4588078 as a material for a hydrogen gas tank liner has good impact resistance at low temperature, but it has a disadvantage of poor gas barrier property. On the other hand, a polyamide resin composition disclosed in Korean Patent No. 10-2189936 as a material for a gas storage tank liner has good gas barrier property, but it has a disadvantage of poor impact resistance at low temperature.

Therefore, it has been required to develop a polyamide resin composition which exhibits excellent gas barrier property and excellent impact resistance (particularly, high impact resistance at low temperature) at the same time to a level suitable for use as inner liner of gas storage container.

### PROBLEMS TO BE SOLVED

The purpose of the present invention is to provide a polyamide resin composition which exhibits excellent gas barrier property and excellent impact resistance (particularly, high impact resistance at low temperature) at the same time so as to be suitable for use as inner liner material of gas storage container.

### TECHNICAL MEANS

In order to achieve the above-stated purpose, the present invention provides a polyamide resin composition, comprising (1) a polyamide resin; (2) a thermoplastic polyester elastomer; (3) an impact modifier; and (4) a nucleating agent, wherein, based on total 100 parts by weight of the composition, the amount of the thermoplastic polyester elastomer is from greater than 0.5 part by weight to less than 20 parts by weight, the amount of the impact modifier is from greater than 11 parts by weight to less than 34 parts by weight, and the amount of the nucleating agent is from greater than 0 part by weight to less than 3 parts by weight.

In other aspect, the present invention provides a molded article comprising the polyamide resin composition of the present invention.

In an embodiment, the molded article is an inner liner of a gas storage container.

### EFFECT OF THE INVENTION

The polyamide resin composition of the present invention exhibits excellent gas barrier property and excellent impact resistance (particularly, high impact resistance at low temperature) at the same time-which could not be achieved by conventional polyamide resin compositions-and also has good mechanical properties such as tensile strength and good heat resistance, and so can be utilized very suitably for use as inner liner of gas storage container. In particular, the polyamide resin composition of the present invention satisfies a high level, which are required for use as inner liner of gas storage container, of gas barrier property (i.e., a gas transmission rate at 3 mm thickness of 170 cm³/(m²·24h·atm) or less measured at 80 °C according to ISO 15105) and impact resistance at low temperature (i.e., a Charpy notch impact strength at -40 °C of 20 kJ/m² or greater measured according to ISO 179) at the same time.

### CONCRETE MODE FOR CARRYING OUT THE INVENTION

The present invention is explained in more detail below.

The term "gas" used herein is a concept including various gaseous substances, and concrete examples thereof may be hydrogen gas, methane, butane, propane, helium, nitrogen gas and oxygen gas, etc., but it is not limited thereto.

The polyamide resin composition of the present invention comprises a polyamide resin.

As the polyamide resin, any one generally used in this field can be used without special limitation.

In an embodiment, the polyamide resin may be aliphatic polyamide homopolymer, aliphatic polyamide copolymer, or combination thereof.

More concretely, the polyamide resin may be selected from the group consisting of polyamide 6, polyamide 66, polyamide 11, polyamide 12, polyamide 6/66, polyamide 66/6, polyamide 66/612, and combinations thereof.

Also, in an embodiment, the polyamide resin may have a relative viscosity in a range of from 2.3 to 4.0. In the relative viscosity of the polyamide resin is too lower than the above level, the tensile strength, impact strength and heat resistance of the composition may be lowered. To the contrary, if the relative viscosity of the polyamide resin is too higher than the above level, the flowability of the composition during molding is insufficient, and thus there may be a problem of poor injection molding processability.

In an embodiment, the polyamide resin composition of the present invention may comprise the polyamide resin in an amount of from 30 to 88 parts by weight, based on total 100 parts by weight of the composition. If the amount of the polyamide resin in total 100 parts by weight of the present polyamide resin composition is too less than the above level, the mechanical strength of the composition may be lowered. To the contrary, if the amount of the polyamide resin is too greater than the above level, the impact strength of the composition may become insufficient.

More concretely, the amount of the polyamide resin in total 100 parts by weight of the polyamide resin composition of the present invention may be, for example, 30 parts by weight or more, 32 parts by weight or more, 35 parts by weight or more, 37 parts by weight or more, 40 parts by weight or more, 42 parts by weight or more, 45 parts by weight or more, 47 parts by weight or more, 50 parts by weight or more, 52 parts by weight or more, 55 parts by weight or more, 57 parts by weight or more, 60 parts by weight or more, 62 parts by weight or more, or 63 parts by weight or more, and it also may be 88 parts by weight or less, 87 parts by weight or less, 86 parts by weight or less, 85 parts by weight or less, 84 parts by weight or less, 83 parts by weight or less, 82 parts by weight or less, 81 parts by weight or less, or 80 parts by weight or less, but it is not limited thereto.

The polyamide resin composition of the present invention also comprises a thermoplastic polyester elastomer (TPEE).

The thermoplastic polyester elastomer is a thermoplastic block copolymer comprising a hard segment with rigidity and a soft segment with flexibility.

In an embodiment, the hard segment may comprise polymerized units of aromatic dicarboxylic compound and diol, and the soft segment may comprise polymerized units of polyalkylene oxide.

Concretely, the aromatic dicarboxylic compound may be selected from the group consisting of terephthalic acid (TPA), isophthalic acid (IPA), 1,5-naphthalenedicarboxylic acid (1,5-NDCA), 2,6-naphthalenedicarboxylic acid (2,6-NDCA), dimethyl terephthalate (DMT), dimethyl isophthalate, and combinations thereof, and preferably it may be DMT.

Also, the diol concretely may be linear or cyclic aliphatic diol having 2 to 8 carbon atoms, and more concretely may be selected from the group consisting of ethylene glycol, propylene glycol, 1,4-butanediol, 1,5-pentanediol, 1,6-hexanediol, 1,4-cyclohexanedimethanol and combinations thereof, and preferably it may be 1,4-butanediol.

Also, the polyalkylene oxide concretely may be selected from the group consisting of polyoxyethylene glycol, polyoxypropylene glycol, polyoxytetramethylene glycol (PTMEG), and combinations thereof, and preferably it may be PTMEG.

In an embodiment, the thermoplastic polyester elastomer may be branched by a branching agent in order to increase melt strength and thereby improve strand stability during TPEE production to increase productivity. The branching agent may be selected from the group consisting of, for example, glycerol, pentaerythritol, neopentylglycol and combinations thereof, and preferably it may be glycerol.

The TPEE that can be used in the polyamide resin composition of the present invention may be prepared through melt polymerization generally consisting of two steps of oligomerization reaction and polycondensation reaction, and preferably it may be a branched TPEE.

The branched TPEE may be prepared by introducing the above-mentioned components into a reactor and then through melt polymerization consisting of two steps of oligomerization reaction and polycondensation reaction in the presence of a suitable catalyst, e.g., tetra-n-butoxy titanium (TBT). The oligomerization reaction may be conducted at 140 to 215 °C for 3 to 4 hours, and the polycondensation reaction may be conducted at 210 to 250 °C for 4 to 5 hours in a process of stepwise reducing the pressure from 760 torr to 0.3 torr.

Considering impact resistance and heat resistance, etc., the amount of the soft segment in the TPEE may be preferably 5 to 75 % by weight, and more preferably 30 to 70 % by weight, based on total 100 % by weight of the TPEE. If the amount of the soft segment in the TPEE is too less, the hardness of the TPEE increases, making it difficult to expect an improvement in impact resistance. To the contrary, if the amount of the soft segment is too much, the heat resistance may decrease.

In an embodiment, the Shore hardness of TPEE that can be used in the polyamide resin composition of the present invention may be D20 to D40.

The polyamide resin composition of the present invention comprises the TPEE in an amount of from greater than 0.5 part by weight to less than 20 parts by weight, based on total 100 parts by weight of the composition. If the amount of the TPEE in total 100 parts by weight of the present polyamide resin composition is 0.5 part by weight or less, the heat resistance of the composition is lowered and the impact resistance or gas barrier property becomes worse. To the contrary, if the amount of the TPEE is 20 parts by weight or greater, both the impact resistance and gas barrier property of the composition are lowered.

More concretely, the amount of the TPEE in total 100 parts by weight of the polyamide resin composition of the present invention may be, for example, greater than 0.5 part by weight, 0.6 part by weight or more, 0.8 part by weight or more, 1 part by weight or more, 1.2 parts by weight or more, 1.4 parts by weight or more, 1.5 parts by weight or more, 1.6 parts by weight or more, 1.8 parts by weight or more, or 2 parts by weight or more, and it also may be less than 20 parts by weight, 19.9 parts by weight or less, 19 parts by weight or less, 18 parts by weight or less, 17 parts by weight or less, 16 parts by weight or less, 15 parts by weight or less, 14 parts by weight or less, 13 parts by weight or less, 12 parts by weight or less, 11 parts by weight or less, 10 parts by weight or less, 9 parts by weight or less, or 8 parts by weight or less, but it is not limited thereto.

The polyamide resin composition of the present invention also comprises an impact modifier.

In an embodiment, the impact modifier may be selected from the group consisting of polyolefin elastomer rubber grafted with maleic anhydride (POE-MAH), ethylene propylene diene monomer rubber grafted with maleic anhydride (EPDM-MAH), styrene-ethylene-butylene-styrene rubber (SEBS), styrene-ethylene-butylene-styrene rubber grafted with maleic anhydride (SEBS-MAH), random terpolymer of ethylene-acrylic ester-glycidyl methacrylate, ethylene-acrylic acid rubber, ethylene-glycidyl methacrylate, and combinations thereof. From the viewpoint of impact resistance at low temperature and heat resistance, polyolefin elastomer rubber grafted with maleic anhydride may be used preferably as the impact modifier.

The polyamide resin composition of the present invention comprises the impact modifier in an amount of from greater than 11 parts by weight to less than 34 parts by weight, based on total 100 parts by weight of the composition. If the amount of the impact modifier in total 100 parts by weight of the present polyamide resin composition is 11 parts by weight or less, the impact resistance of the composition is lowered. To the contrary, if the amount of the impact modifier is 34 parts by weight or greater, the gas barrier property and heat resistance of the composition are lowered.

More concretely, the amount of the impact modifier in total 100 parts by weight of the polyamide resin composition of the present invention may be, for example, greater than 11 **parts by** weight, 11.1 parts by weight or more, 11.5 parts by weight or more, 12 parts by weight or more, 12.5 parts by weight or more, 13 parts by weight or more, 13.5 parts by weight or more, 14 parts by weight or more, 14.5 parts by weight or more, 15 parts by weight or more, 15.5 parts by weight or more, or 16 parts by weight or more, and it also may be less than 34 parts by weight, 33.9 parts by weight or less, 33 parts by weight or less, 32 parts by weight or less, 31 parts by weight or less, 30 parts by weight or less, 29 parts by weight or less, 28 parts by weight or less, 27 parts by weight or less, 26 parts by weight or less, 25 parts by weight or less, or 24 parts by weight or less, but it is not limited thereto.

The polyamide resin composition of the present invention also comprises a nucleating agent.

In an embodiment, the nucleating agent may be inorganic nucleating agent, organic nucleating agent, organic-inorganic composite nucleating agent, or combination thereof, and more concretely may be organic-inorganic composite nucleating agent, but it is not limited thereto.

More concretely, the inorganic nucleating agent may be talc, kaolin, silica, titanium dioxide, nano clay, or combination thereof; the organic nucleating agent may be sodium benzoate, organic phosphate salt, carbon fiber, polyphenylene sulfide, polycarbonate, polyphenylene oxide, polymer having a melting point higher than polyamide 6 by 50 degrees or higher, or combination thereof; and the organic-inorganic composite nucleating agent may be a mixture of a polyamide component and a silicate component advantageously dispersed in nylon phase (for example, Bruggolen P22 of Brüggemann (polyamide 22 + alumina silicate)), but it is not limited thereto.

The polyamide resin composition of the present invention comprises the nucleating agent in an amount of greater than 0 part by weight to less than 3 parts by weight, based on total 100 parts by weight of the composition. If the amount of the nucleating agent in total 100 parts by weight of the present polyamide resin composition is 0, i.e., if the composition does not comprise a nucleating agent, the impact resistance of the composition becomes very poor. To the contrary, if the amount of the nucleating agent is 3 parts by weight or greater, the impact resistance and heat resistance of the composition are lowered.

More concretely, the amount of the nucleating agent in total 100 parts by weight of the polyamide resin composition of the present invention may be, for example, greater than 0 part by weight, 0.001 part by weight or more, 0.005 part by weight or more, 0.01 part by weight or more, 0.02 part by weight or more, 0.03 part by weight or more, 0.04 part by weight or more, or 0.05 part by weight or more, and it also may be less than 3 parts by weight, 2.9 parts by weight or less, 2.8 parts by weight or less, 2.5 parts by weight or less, 2.3 parts by weight or less, 2 parts by weight or less, 1.8 parts by weight or less, or 1.5 parts by weight or less, but it is not limited thereto.

In addition to the above-explained components, the polyamide resin composition of the present invention may further comprise one or more additives conventionally used in polyamide resin compositions.

In an embodiment, the additive may be selected from heat stabilizers, antioxidants, lubricants, flame retardants, flame retardant aids, and combinations thereof, and the amount thereof may be 0.1 to 20 parts by weight, or 1 to 10 parts by weight, based on total 100 parts by weight of the composition, but it is not limited thereto.

Because of the constitution comprising combination of the above-explained specific essential components with specific amount ratios, the polyamide resin composition of the present invention can exhibit excellent gas barrier property and excellent impact resistance at low temperature at the same time enough to satisfy the high level required for use as inner liner for gas storage container.

For example, although it is not limited thereto, the polyamide resin composition of the present invention can exhibit such excellent gas barrier property as corresponding to a gas transmission rate at 3 mm thickness of 170 cm³/(m²·24h·atm) or less, 165 cm³/(m²·24h·atm) or less, 160 cm³/(m² 24h·atm) or less, or 155 cm³/(m² 24h·atm) or less measured at 80 °C according to ISO 15105, and such excellent impact resistance at low temperature as corresponding to a Charpy notch impact strength at -40 °C of 20 kJ/m² or greater, 25 kJ/m² or greater, 30 kJ/m² or greater, or 35 kJ/m² or greater measured according to ISO 179, at the same time.

In addition, although it is not limited thereto, for example, the polyamide resin composition of the present invention can exhibit good heat resistance. According to an embodiment, even after treatment at 120°C for 3,000 hours, the polyamide resin composition of the present invention can exhibit a tensile strength of 80% or more of the tensile strength before the treatment (i.e., a tensile strength retention rate of 80% or more).

As such, the polyamide resin composition of the present invention exhibits excellent gas barrier property and excellent impact resistance (particularly, high impact resistance at low temperature) at the same time-which could not be achieved by conventional polyamide resin compositions-and also has good mechanical properties such as tensile strength and good heat resistance, and so can be utilized very suitably for use as inner liner of gas storage container.

There is no special limitation on the method for preparing the polyamide resin composition of the present invention, and it may be appropriately selected according to the equipment used and other process factors. According to an embodiment of the present invention, polyamide resin pellets can be prepared by mixing raw materials and feeding them into an extruder hopper, and extruding the mixture at a melting temperature of 200 to 300 °C with an RPM of 150 to 250, but it is not limited thereto.

Therefore, the other aspect of the present invention provides a molded article comprising the polyamide resin composition of the present invention, and in a preferable embodiment, the molded article is an inner liner of a gas storage container.

The molded article may be an extrusion-molded article or an injection-molded article of the polyamide resin composition of the present invention, and in an embodiment, the molding process may be extrusion, injection, blow (hollow molding), rotary molding, etc., but it is not limited thereto.

The present invention is explained in more detail through the following Examples. However, the scope of the present invention is not limited thereby in any manner.

### [EXAMPLES]

### Examples 1 to 6 and Comparative Examples 1 to 10

### <Preparation of polyamide resin composition>

The resin compositions were prepared with the components and amounts for each example and comparative example shown in the following Table 1. That is, the raw materials consisting of polyamide, thermoplastic polyester elastomer, impact modifier, nucleating agent, etc., as specified in the Explanation of Components below, were mixed in a super mixer for about 2 minutes, and then fed into an extruder hopper to prepare pellets. The extruder used was a 30 mm extruder with 12 barrels (Japan Steel Works). The RPM was set to 250 and the melting temperature was set for each section using 260°C as standard. The composition after the extrusion process was cooled in a cooling bath, and then prepared as pellets of polyamide resin composition.

### <Explanation of Components>

(1) Polyamide resin: Polyamide 6 with a relative viscosity of 2.7 (KP Chemtech EN350AA)
(2) Thermoplastic polyester elastomer (TPEE): TPEE with a shore hardness of D30 was prepared by the manufacturing method described below, and used:
   In an oligomerization reactor, 29.39 parts by weight of dimethyl terephthalate (DMT), 18.77 parts by weight of 1,4-butanediol, 51.64 parts by weight of polyoxytetramethylene glycol (PTMEG) having a molecular weight of 2,000, and 0.065 part by weight of glycerol were put, and 0.025 part by weight of tetra-n-butoxytitanium (TBT) as a catalyst was added thereto. The reaction temperature was increased from 140 °C to 215 °C for 120 minutes, and the reaction was continued for an additional 120 minutes while maintaining 215 °C. The amount of methanol, which was the reaction effluent, was converted into a reaction rate, and the reaction was terminated when the reaction rate became 99% or higher. Thereafter, 0.04 part by weight of TBT, the catalyst, and 0.07 part by weight of a heat stabilizer (Irganox 1010) were further added and the polycondensation reaction was conducted. The polycondensation reaction was conducted by heating from 215 °C to 250 °C for 120 minutes and maintaining 250 °C for an additional 120 minutes. At that time, the pressure was reduced from 760 torr to 0.3 torr for 1 hour, and vacuum condition of 0.3 torr or less was maintained for the remaining 3 hours, and the final pressure reduction was controlled to 0.3 torr or less, to prepare TPEE with a Shore hardness of D30. The intrinsic viscosity of the TPEE prepare as such was 1.9 to 2.0 dl/g when measured in a solvent of phenol/tetrachloroethane (TCE) = 50/50.
(3) Impact modifier: Polyolefin elastomer grafted with maleic anhydride (W1A, XIAMEN COACE PLASTIC)
(4-1) Nucleating agent 1: Organic-inorganic composite nucleating agent (polyamide 22 + alumina silicate) (Bruggolen P22, Brüggemann)
(4-2) Nucleating agent 2: Inorganic nucleating agent (talc) (KCM 2000C, KOCH)
(5) Nano clay: Layered silicate (Closite 93A)
(6) Reinforcing filler: Wollastonite (Nyglos 4W)
(7) Aliphatic polyamide copolymer: Novamid 2430A (PA6/66 Copolyamide, DSM Engineering Materials)
(8) Others: A heat stabilizer, an antioxidant, and a lubricant were added to each experiment group at 2 parts by weight per 100 parts by weight of the total composition.

**[Table 1]**

| Component | (1) | (2) | (3) | (4-1) | (4-2) | (5) | (6) | (7) | (8) |
|---|---|---|---|---|---|---|---|---|---|
| Example 1 | 73.9 | 4 | 20 | 0.1 | - | - | - | - | 2 |
| Example 2 | 73.9 | 6 | 18 | 0.1 | - | - | - | - | 2 |
| Example 3 | 71.9 | 2 | 24 | 0.1 | - | - | - | - | 2 |
| Example 4 | 72.9 | 8 | 16 | 0.1 | - | - | - | - | 2 |
| Example 5 | 72.5 | 4 | 20 | 1.5 | - | - | - | - | 2 |
| Example 6 | 73.95 | 4 | 20 | 0.05 | - | - | - | - | 2 |
| Comparative Example 1 | 79.8 | - | 20 | - | 0.2 | - | - | - | - |
| Comparative Example 2 | 56 | - | 24 | - | - | - | - | 20 | - |
| Comparative Example 3 | 75 | - | 10 | - | - | 5 | - | 10 | - |
| Comparative Example 4 | 52.5 | 7.5 | 15 | - | - | - | 25 | - | - |
| Comparative Example 5 | 73.8 | 4 | 20 | - | - | 0.2 | - | - | 2 |
| Comparative Example 6 | 78.9 | 8 | 11 | 0.2 | - | - | - | - | 2 |
| Comparative Example 7 | 61.9 | 2 | 34 | 0.2 | - | - | - | - | 2 |
| Comparative Example 8 | 71.4 | 0.5 | 26 | 0.2 | - | - | - | - | 2 |
| Comparative Example 9 | 62.9 | 20 | 15 | 0.2 | - | - | - | - | 2 |
| Comparative Example 10 | 70 | 4 | 20 | 3 | - | - | - | - | 2 |

### <Property Measurement and Evaluation>

For the polyamide resin compositions prepared as above, the following properties were measured and evaluated, and the results are summarized in Table 2 below.
(1) Impact strength at low temperature: A specimen was manufactured according to ISO 179 and kept in a low-temperature freezer at -40°C for 4 hours, and within 5 seconds from taking it out of the freezer, the Charpy notch impact strength was measured.
(2) Gas transmission rate (GTR): Gas transmission rate was measured using a plastic specimen according to ISO 15105. The specimen was mounted between two chambers of gas transfer cell so as to form a barrier. The test gas was contained in one chamber at high pressure, and the transmitted gas was collected and detected in the other chamber. The gas transmission test was performed at a temperature of 80 °C using hydrogen gas. The unit of the transmission rate is cm³/(m² 24h·atm).
(3) Evaluation of long-term heat resistance through tensile strength and impact strength measurements: After manufacturing a specimen according to ISO 527-2, the initial tensile strength was measured. The same specimen was kept in an oven set to 120 °C for 3,000 hours, and after the 3,000 hours, the specimen was taken out and the tensile strength was measured in the same manner. The tensile strength retention rate (%) was calculated in comparison with the initial value, and the long-term heat resistance was evaluated.

**[Table 2]**

| | Impact strength at low temperature (-40°C) | Gas transmission rate (GTR) (80°C) (cm³/(m²·24h·atm)) | Initial tensile strength (MPa) | Tensile strength after 3000 h at 120°C (MPa) | Tensile strength retention rate (%) |
|---|---|---|---|---|---|
| Example 1 | 23 | 161 | 42 | 34 | 82 |
| Example 2 | 21 | 154 | 43 | 36 | 84 |
| Example 3 | 24 | 164 | 41 | 33 | 80 |
| Example 4 | 20 | 152 | 43 | 37 | 85 |
| Example 5 | 22 | 153 | 41 | 34 | 83 |
| Example 6 | 21 | 165 | 41 | 34 | 82 |
| Comparative Example 1 | 17 | 154 | 44 | 33 | 75 |
| Comparative Example 2 | 24 | 182 | 36 | 26 | 73 |
| Comparative Example 3 | 13 | 143 | 48 | 39 | 82 |
| Comparative Example 4 | 11 | 158 | 41 | 31 | 75 |
| Comparative Example 5 | 17 | 158 | 41 | 30 | 73 |
| Comparative Example 6 | 16 | 150 | 44 | 38 | 86 |
| Comparative Example 7 | 32 | 192 | 32 | 22 | 68 |
| Comparative Example 8 | 25 | 178 | 40 | 30 | 74 |
| Comparative Example 9 | 14 | 172 | 35 | 30 | 85 |
| Comparative Example 10 | 16 | 154 | 39 | 30 | 74 |

As can be seen from Table 2 above, the polyamide resin compositions according to Examples 1 to 6 exhibited excellent gas barrier property and excellent impact resistance at low temperature at the same time enough to satisfy the high level required for use as inner liner for gas storage container.

On the other hand, the compositions of Comparative Examples 1, 3 to 6, 9 and 10 had good gas barrier property but poor impact resistance at low temperature, and thus were unsuitable as materials for hydrogen gas tank used in a temperature range including low temperature (-40 °C to 80 °C). The compositions of Comparative Examples 2, 7 and 8 had good impact resistance at low temperature but poor gas barrier property, and thus were unsuitable as materials for hydrogen gas tank, too. In addition, the compositions of Comparative Examples 1 to 4, 5, 7, 8 and 10 also had poor long-term heat resistance.

## Claims

1. A polyamide resin composition, comprising:
(1) a polyamide resin;
(2) a thermoplastic polyester elastomer;
(3) an impact modifier; and
(4) a nucleating agent,
wherein, based on total 100 parts by weight of the composition,
the amount of the thermoplastic polyester elastomer is from greater than 0.5 part by weight to less than 20 parts by weight,
the amount of the impact modifier is from greater than **11** parts by weight to less than 34 parts by weight, and
the amount of the nucleating agent is from greater than 0 part by weight to less than 3 parts by weight.

2. The polyamide resin composition of claim 1, wherein the polyamide resin is aliphatic polyamide homopolymer, aliphatic polyamide copolymer, or combination thereof.

3. The polyamide resin composition of claim 1, wherein the thermoplastic polyester elastomer is a thermoplastic block copolymer comprising a hard segment with rigidity and a soft segment with flexibility.

4. The polyamide resin composition of claim 3, wherein the hard segment comprises polymerized units of aromatic dicarboxylic compound and diol, and the soft segment comprises polymerized units of polyalkylene oxide.

5. The polyamide resin composition of claim 4, wherein
the aromatic dicarboxylic compound is selected from the group consisting of terephthalic acid (TPA), isophthalic acid (IPA), 1,5-naphthalenedicarboxylic acid (1,5-NDCA), 2,6-naphthalenedicarboxylic acid (2,6-NDCA), dimethyl terephthalate (DMT), dimethyl isophthalate, and combinations thereof;
the diol concretely is selected from the group consisting of ethylene glycol, propylene glycol, 1,4-butanediol, 1,5-pentanediol, 1,6-hexanediol, 1,4-cyclohexanedimethanol and combinations thereof; and
the polyalkylene oxide is selected from the group consisting of polyoxyethylene glycol, polyoxypropylene glycol, polyoxytetramethylene glycol (PTMEG), and combinations thereof.

6. The polyamide resin composition of claim 1, wherein the impact modifier is selected from the group consisting of polyolefin elastomer rubber grafted with maleic anhydride (POE-MAH), ethylene propylene diene monomer rubber grafted with maleic anhydride (EPDM-MAH), styrene-ethylene-butylene-styrene rubber (SEBS), styrene-ethylene-butylene-styrene rubber grafted with maleic anhydride (SEBS-MAH), random terpolymer of ethylene-acrylic ester-glycidyl methacrylate, ethylene-acrylic acid rubber, ethylene-glycidyl methacrylate, and combinations thereof.

7. The polyamide resin composition of claim 1, wherein the nucleating agent is inorganic nucleating agent, organic nucleating agent, organic-inorganic composite nucleating agent, or combination thereof.

8. The polyamide resin composition of claim 7, wherein
the inorganic nucleating agent is talc, kaolin, silica, titanium dioxide, nano clay, or combination thereof;
the organic nucleating agent is sodium benzoate, organic phosphate salt, carbon fiber, polyphenylene sulfide, polycarbonate, polyphenylene oxide, polymer having a melting point higher than polyamide 6 by 50 degrees or higher, or combination thereof; and
the organic-inorganic composite nucleating agent is a mixture of a polyamide component and a silicate component.

9. A molded article comprising the polyamide resin composition of any one of claims 1 to 8.

10. The molded article of claim 9, which is an inner liner of a gas storage container.
